# DEMANDE DE BREVET EUROPEEN

(11) **EP 1 752 902 A1**
(43) Date de publication de la demande: **14.02.2007**
(21) Numéro de dépôt: 06291301.7
(22) Date de dépôt: 11.08.2006
(51) Int. Cl.: G06F 21/00

(54) **Serveur d'authentification pour l'identité numérique**

(30) Priorité: 12.08.2005 FR 0552502
(71) Demandeur: Initialesonline, 93170 Bagnolet (FR)
(72) Inventeur: Koleilat, Samir, 75007 Paris (FR)
(74) Mandataire: Breese Derambure Majerowicz

(57) **Abrégé**

La présente invention se rapporte à un système d'information (S.I.) pour l'authentification de l'identité numérique comprenant un serveur d'authentification, une pluralité de postes clients de serveurs secondaires et un réseau de communication, ledit SI mettant en oeuvre le SSO (*Single Sign On)* caractérisé en ce que ladite identité numérique est portable d'un serveur à l'autre et en ce que la livraison de ladite identité est réalisée sur un support magnétique.

## Description

La présente invention se rapporte au domaine des technologies de l'information et de la communication.
La présente invention se rapporte plus particulièrement à un serveur d'authentification pour l'identité numérique.

Il existe un besoin pour des solutions d'identité fédérées, et en particulier pour la jonction et la transmission d'informations d'identité entre deux entreprises ou plus. Le développement actuel rapide des technologies et leur croissance, notamment les technologies de communication et des événements géopolitiques (par exemple, la croissance du nombre de services Web sur Internet, les spams et le terrorisme) impliquent une sécurité accrue.
Les trois tendances sur le réseau des réseaux qui mettent en exergue les besoins dans un avenir proche d'une identité digitale fédérée et sécurisée sont :
- le vol et l'usurpation d'identité ;
- la multiplication des noms d'utilisateur et mots de passe due à la croissance du nombre de serveurs à accès sécurisés ;
- la prolifération des médias de communication électronique fixe et mobile multiples.

On connaît dans l'art antérieur la gestion d'identité fédérée (ou FIM : *Federated Identity Management).* Des consortiums industriels se sont développés sur ce thème en proposant des cahiers de charges et des spécifications standards pour la fédération de l'identité, mais ils ne fournissent de solutions logicielles utilisables par les entreprises.

Le but de la présente invention est de proposer des solutions prêtes au déploiement pour les entreprises et une intégration aux solutions et architectures de sécurités existantes dans les entreprises tout en répondant aux exigences de chacun.

On connaît dans l'état de la technique des demandes de brevets, par exemple la demande de brevet américain US 2002/0042758 (Deng) *"Method and system for ordering and downloading digital content with unique identity recognition through a network",* la demande de brevet américain US 2003/0140225 (Banks et al.) *"Method and system for the on-line supply of digital products or the access to on-line services" ;* la demande de brevet américain US 2003/0115142 (Intel) *"Identity authentication portfolio system" ;* et la demande de brevet américain US 2004/0205243 (Hurvig et al.) *"System and method for managing digital identities".*

On connaît également dans l'état de la technique la demande de brevet PCT WO 03/032610 (Liberate Technologies) *"System, method and apparatus for portable digital identity".* Deux dispositifs multimédia numériques bidirectionnels stockent généralement des données d'identification numérique permettant à des fournisseurs de contenu et de données interactives d'identifier un usager. Dans le cas d'un navigateur Web d'ordinateur personnel, l'identité numérique est stockée sous la forme d'une pluralité de mouchards électroniques qui sont utilisés par les sites Web respectifs pour personnaliser les connaissances du site concernant chaque usager particulier. Lorsqu'un usager utilise un ordinateur différent, les données d'identification numérique ne sont pas disponibles. De plus, d'autres types de dispositifs interactifs tels que boîtiers décodeurs CATV, téléphones cellulaires, PDA et analogue, peuvent n'avoir pas assez de mémoire non volatile (mémoire rémanente) pour stocker les données d'identification numérique. Afin de fournir aux usagers une identité numérique portable, un serveur d'identité numérique établi comme noeud de serveur sur l'Internet récupère des données d'identification numérique et télécharge ces données, sur demande, vers n'importe quel dispositif. De cette manière, l'identité numérique de l'usager est portable et disponible à n'importe quel ordinateur ou autre dispositif numérique utilisé. Le serveur d'identité numérique du système permet à des dispositifs n'ayant pas suffisamment de mémoire non volatile de télécharger une identité numérique en vue d'un stockage temporaire dans la mémoire volatile, et de fournir ainsi une identité numérique à des dispositifs sans mémoire non volatile.

On connaît aussi dans l'état de la technique la demande de brevet américain US 2003/0172090 (Asunmaa) *"Virtual identity apparatus and method for using same".*

La présente invention entend résoudre les inconvénients de l'art antérieur en fournissant une solution multi-protocoles spécialisée dans la fédération de l'identité afin de répondre aux besoins d'implémentation rapide des entreprises, cette solution étant inter-opérable avec les acteurs extérieurs équipés de la même solution.

À cet effet, la présente invention concerne, dans son acception la plus générale, un système d'information (S.I.) pour l'authentification de l'identité numérique comprenant un serveur d'authentification, une pluralité de postes clients de serveurs secondaires et un réseau de communication, ledit SI mettant en oeuvre le SSO (*Single Sign On*) caractérisé en ce que ladite identité numérique est portable d'un serveur à l'autre et en ce que la livraison de ladite identité est réalisée sur un support magnétique.

De préférence, ledit SI est implémenté en SAML *(Security Assertion Markup Language).*

Selon un mode de réalisation, ledit SI est constitué d'un Intranet au sein d'une entreprise.
Selon un autre mode de réalisation, ledit SI est constitué à travers plusieurs réseaux d'entreprises partenaires en Extranet.
Selon un mode de mise en oeuvre particulier, ledit SI est constitué sur un réseau ouvert au public.
Avantageusement, ladite identité numérique est enregistrée dans des méta-annuaires d'entreprise.
Selon une variante, la livraison de l'identité est réalisée sur une clé USB.
Selon un mode de mise en oeuvre, la livraison de l'identité est réalisée sur une carte mémoire ou un disque au format PCMCIA.
Selon un mode de réalisation, la livraison de l'identité est réalisée sur une cartouche de mémoire.
Avantageusement, ledit SI met en oeuvre des mécanismes de paiement électronique.

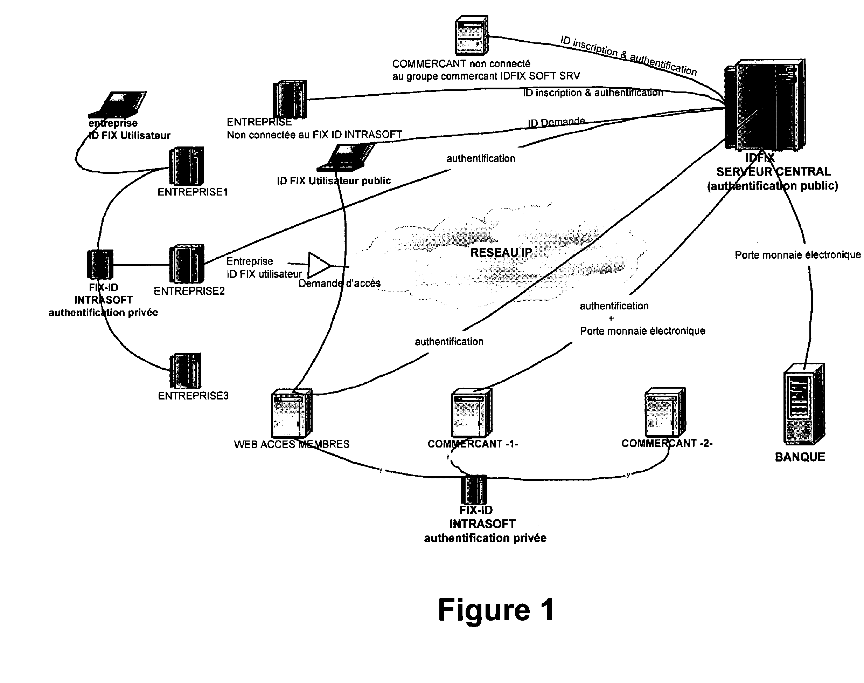

On comprendra mieux l'invention à l'aide de la description, faite ci-après à titre purement explicatif, d'un mode de réalisation de l'invention, en référence à la figure unique annexée qui illustre le système selon la présente invention.

Selon la présente invention, le serveur de base de données fédérateur des informations contenues dans d'autres multiples bases de données, il est l'assembleur des informations dans le but d'une création d'un calibre d'information par utilisateur qui est nommé Identité Digitale, ou afin de compléter un calibre créé par l'individu lui-même propriétaire de ses informations, ou en utilisant à la demande de l'individu d'une identité privée ou public existante, contenant ou non, une signature électronique.

Le serveur selon l'invention est synchronisé avec d'autres bases de données contenant un complément d'informations publiques concernant le même individu pour permettre une mise à jour automatique du calibre dès son changement des informations suivantes :
- Son numéro de téléphone fixe ou mobile, ou changement de son opérateur en gardant son numéro par demande de portabilité. (N° du fax ou SMS)
- Son changement d'adresse e-mail liée à un domaine, ou changement de son prestataire Internet hébergeur.
- Son changement d'adresse postale.
- Son changement de société, identifiée par son N° de TVA intracommunautaire ou suivi du code du pays.
- Incluant son numéro de sécurité sociale, code inchangeable.
- Un nom d'utilisateur (Login)
- Un mot de passe (Password)
- Un pseudonyme (Pseudoname)
- Changement de ses numéros de plaques minéralogiques. Ou changement de prestataire.
- Options : signature électronique, carte d'identité nationale digitale.
- Option paiement sécurisé : porte-monnaie électronique.

(le calibre est géré aux normes du standard mondial ENUM en E164.cc.numtel.inaddr.arpa à travers un opérateur prestataire techniquement qualifié)

Clé de sécurité : chiffre et lettre code PIN : six positions
Note : A la demande de l'individu et selon la souscription à l'établissement initial de son identité digitale, les informations apparaissent à la lecture du calibre ou restent cryptées, chaque information ayant fait l'objet d'un attribut donné par le propriétaire la rendant visible par le public visible par une catégorie de correspondants ou visible uniquement par lui-même et les autorités légales.

Le système selon la présente invention est un outil d'authentification des identités digitales fédérés. Il met à la disposition des serveurs qui en font la demande une authentification forte et garantie afin qu'ils autorisent l'accès à leurs espaces de données ou d'achat de biens sur les sites de commerce électronique.

Les serveurs qui en font la demande utilisent l'identité digitale créée et stockée par le système selon la présente invention par reconnaissance de la clé de sécurité du calibre, acceptent le format de cette clé, donnent l'autorisation d'accès au porteur de l'identité, accèdent uniquement aux informations ayant l'attribut visible donné par le propriétaire et demandent l'autorisation d'obtenir un complément d'information au porteur.

Ceci permet au porteur de l'identité digitale fédérée d'accéder à des serveurs disponibles sur Internet tout en conservant son anonymat par une reconnaissance d'un tiers de confiance. Il n'est pas obligé de créer une nouvelle identité auprès de chaque serveur visité ni d'un nouveau nom d'utilisateur et nouveau mot de passe. Ceci grâce à une procédure technique de portabilité des Identités digitales.

La création de l'identité répond aux lois européennes et françaises.

Les mécanismes techniques d'authentification et d'échanges d'information concernant l'identité digitale entre serveurs sont effectués par des normes et technologies standard mondiaux en SAML (*Security Assertions Mark-up Language)* qui est un langage basé sur le XML, et Liberty Alliance afin de créer une identité à spécification unique utiliser par tous les acteurs techniques. La vérification des procédures d'échange est effectuée par un standard mondial ouvert WS.Federation.
La portabilité de l'identité digitale fédérée de son authentification de son stockage et sa mise à jour est livrée par les serveurs selon la présente invention pour un usage ouvert au public et à leurs relations avec les serveurs de l'Internet. Il est ouvert au commerçant qui opte pour la simplicité de l'utilisation de cette identité digitale.

Le système selon la présente invention est disponible dans une version identique destinée à l'usage d'une entreprise privée ou publique, qui ouvre à ses utilisateurs les accès sécurisés par un unique nom d'utilisateur et mot de passe à différentes bases de données dans différents services localisés sur différents sites. Ledit système permet à deux entreprises utilisant le même serveur de partager des informations par autorisation d'accès à leurs employés respectifs aux bases de données définis par les uns et les autres.
Le système selon la présente invention est compatible avec des serveurs utilisant les mêmes standards ouverts au public et permet aux serveurs abonnés de bénéficier de ces mises à jour par un accord préalable pour le respect des informations individuelles.

La présente invention est une application qui peut être développée autour de plusieurs technologies, par exemple en Open Source. Le système d'information selon la présente invention délivre et authentifie l'identité numérique au sein d'une entreprise au moyen du SSO *(Single Sign On).* Cette identité est portable d'un serveur à l'autre sans aucun besoin de s'identifier car l'identité est authentifiée par le serveur. De plus, l'identité est intégrée aux méta-annuaires de l'entreprise ainsi qu'à d'autres base de données telles que l'annuaire téléphonique.

La présente invention concerne l'identité digitale délivrée et authentifiée par son propre serveur d'authentification, valable sur un intranet au sein d'une entreprise, à travers plusieurs réseaux d'entreprises partenaires en Extranet, ou sur un réseau ouvert au public.

L'identité digitale selon la présente invention est la clé de la protection des informations qui concerne l'individu au sein d'une entreprise ou sur Internet.

L'identité numérique selon la présente invention est au format des technologies standards et possède un contenu riche, utilisant les clés de cryptographie autorisés par chaque pays et répondant aux méthodes d'authentification forte déjà en usage sur les marchés. Elle est soumise à la norme standard d'échange d'information du standard SAML (*Security Assertion Markup Language)* ou autres. Elle est opérationnelle entre serveurs de fichier d'une même société ou de sociétés différentes, ou aussi, par le serveur selon la présente invention, ouverte au public en Europe.

L'identité numérique selon la présente invention est délivrée uniquement sur demande effectuée auprès d'un tiers de confiance sur présentation d'un document officiel tel que le passeport européen contenant une donnée biométrique. Elle pourrait être délivrée par l'utilisation de la signature électronique délivrée par l'administration française utilisée pour les accès aux télé-procédures.

La livraison de l'identité est faite sur un support magnétique du type clé USB ou Carte mémoire ou disque au format PCMCIA ou cartouche de mémoire utilisée sur les PDA des appareils mobiles.

L'identité ne doit en aucun cas être livrée sur le support fixe contenu dans l'appareil utilisé pour les accès aux réseaux et aux services.

Elle permet aussi aux administrateurs de réseaux au sein de l'entreprise d'ouvrir des espaces d'informations par catégorie de personnes sans connaître les identités des utilisateurs, d'en attribuer des droits et des interdits selon différents types de critères sans accéder aux identités des personnes concernés.

Les entreprises pourraient faire partager leurs ressources à leurs employeurs ou clients respectifs sans être obligés de dupliquer les informations détenues par l'une sur des serveurs intégrés aux réseaux de l'autre, ainsi d'éviter des synchronisations coûteuses pour permettre les mises à jour des informations. Elles pourraient également choisir en fonction de différents critères contenus dans l'identité digitale d'attribuer des droits standards et des droits spécifiques à chacun des utilisateurs ou clients sans qu'aucune des sociétés ne puisse découvrir les identités des utilisateurs ou des clients de l'autre.

Les serveurs d'accès sécurisés ouverts uniquement à leurs abonnés, et serveurs de commerce électronique pourraient ouvrir l'accès aux détenteurs d'une identité digitale selon la présente invention par simple demande d'authentification en temps réel effectuée sur le serveur d'authentification selon la présente invention. Ceci dispense les vendeurs de contenus et de commerce électronique de demander aux utilisateurs l'inscription préalable et l'obligation de remplir les formulaires électroniques. Cela dispense également l'utilisateur d'avoir un nouveau nom d'utilisateur ou mot de passe, également de ne jamais laisser les informations qui le concernent sur des sites s'il ne souhaite pas.

L'utilisateur du serveur d'authentification selon la présente invention pourra éventuellement utiliser le paiement par un porte-monnaie délivré par les banques partenaires sans avoir à utiliser leurs cartes bancaires à chaque paiement.

L'innovation consiste dans les fonctionnalités de production de l'identité digitale et fédération de cette identité, la production est au format standard et son intégration au template électronique sera utilisée pour les méta-annuaires de l'administrateur du réseau local de l'entreprise, de son intégration aux annuaires téléphoniques de l'entreprise à la norme ENUM ou aux normes des annuaires universels électroniques.

Cette identité digitale intègre les différents modes de paiement, cette intégration permet également la protection de l'utilisateur lors de son passage sur des sites de commerce électronique ou de site à accès réservé d'être entièrement protégé contre le *« hacking* » ou le « *spamming »* ou l'usurpation de son identité ou de son adresse email ou le numéro de sa carte de crédit.

Structure de l'identité. (entreprise ou individu)

| | | |
|---|---|---|
| Admin : | | alias : |
| Tech : | | alias : |
| Nom : | | |
| Prénoms : | | |
| Adresse I : | | |
| Adresse personnelle : | | |
| Email : | | option : domaine |
| name DNS .name | | |
| Num FIXE : | oper origine : | |
| portabilité: | | |
| Num Fax : | oper origine : | |
| portabilité: | | |
| Num Mob : | oper origine : | |
| portabilité: | | |
| Num toip : sip@ | | adresse IP : |
| Pseudo ―NIC-hdl : xxxxxmd5 | | |
| Login : xxxxxxx md5 | | |
| Password : xxxxxxx md5 | | |
| Alias Raison Sociale TVA num : | | |
| Optionnel : | sexe : | age : |
| nationalité : | | |
| Optionnel : | degré niveau d'accès : 1.2.3.4.5.6.7.8.9.11.12.13.14.15.16.17.18.19.20. | |

Format technique :
E164.3312354657698.inaddr.arpa
MD5 : PGP : 256 Bits.

Méthode d'échange et d'authentification :
SAML . SOURCE ID .

Option:

Porte-Monnaie :

Plaque minéralogique :

Clé d'authentification entre serveur :
**Clé DIGITAL - ID : ZHDTRU567LK13.ZERD5 PSSWD: XDSE8**

Relation avec d'autres données existantes :

Plusieurs bases de données sont en ligne. Elles contiennent des informations concernant une entreprise ou un individu, le serveur selon la présente invention se synchronise automatiquement avec ces bases de données par le protocole FTP, ou par WHOIS. La synchronisation est établie par plusieurs hiérarchies afin d'établir l'authenticité des informations ; elle complète ou met à jour automatiquement les informations après validation du propriétaire de l'identité numérique.
1- RIPE - adresse IP template >> LIR >>>> format texte >>>> SRV IDFIX
2- ACERP - NUM OPERATEUR >>>> Info portabilité >>>> annu universel >>> SRV IDFIX.
3- AFNIC /ICANN >> DNStemplate >>> Rregistrar >>> SRV ID FIX
4- METTA ANNU >>> IDFIX template >>>> SRV IDFIX.
5- EDITION online >>>> IDFIX template >>>> SRV IDFIX.
6- ENUM - DNS >>>> IDFIX ENUM DNS >>>> SRV IDFIX. méthode de cryptographie.
MD5 - PGP - clé 256 BITS - SSSOX - ETC
Structure du serveur d'authentification.
LDAP DIRECTORY >>>>>> LDAP PROXY >>>>>>SRV IDFIX >> metadatat >>> IDAUTHENTIFICATION DIRECTORY >>>>>
Synchronisation des serveurs en Intra et Extranet.
Synchro par Verisigne ou Thawte.
Méthode d'authentification entre serveur demandeur et serveur d'IDFIX.
SAML / SOURCE ID
méthode de mise en disponibilité des serveurs d'authentification.
SRV primaire en cluster avec SRV 2 en cluster sur deux DATA CENTER différents reliés par double anneau fibre sur deux réseaux fibre différents. Sauvegarde et stockage en Storage Access Network redondante. méthodes de tunnelling entre serveurs partenaires ou d'authentification.
ras
documentations diverses de sécurité.
base de données de stockage des calibres.
(LDAP ou My SQL - meta data )
Note de support du Calibre ( template )
Structure de l'identité. ( entreprise ou individu )
Admin : la personne autorisée à faire les modifications alias : son login, pwd dans la BD
Tech : la personne à contacter en cas de prob tech alias : moyen de communication

| | | |
|---|---|---|
| Nom : | | |
| Prénoms : | | |
| Adresse I : | | |
| Adresse personnelle : | | |
| Email : | | option : DNS si |
| propriétaire | | |
| Num FIXE : | oper origine : code ARCEP | |
| portabilité: ARCEP | | |
| Num Fax : | oper origine : | |
| portabilité: | | |
| Num Mob : | oper origine : | |
| portabilité: | | |
| Num toip : sip@ | | adresse IP : |
| Pseudo ―NIC-hdl : xxxxxmd5 | | |
| Loggin : xxxxxxx md5 | | |
| Password : xxxxxxx md5 | | |
| Alias Raison Sociale TVA num : | | |
| Optionnel : | sexe : | age : |
| nationalité : | | |
| Optionnel : | degré niveau d'accès : 1.2.3.4.5.6.7.8.9.11.12.13.14.15.16.17.18.19.20. | |

Format technique :
E164.3312354657698.inaddr.arpa
MD5 : PGP : 256 Bits.

| | | | | |
|---|---|---|---|---|
| OPER CPS : | | | ORIGIN : | |
| | ACTUEL : | | | |
| OPER CODE DE PORTABILTE | | ORIGIN : | | ACTUEL : |
| OPER CPS : | | | ORIGIN : | |
| | ACTUEL : | | | |
| OPER CODE DE PORTABILTE | | ORIGIN : | | ACTUEL : |
| OPER CPS : | | | ORIGIN : | |
| | ACTUEL : | | | |
| OPER CODE DE PORTABILTE | | ORIGIN : | | ACTUEL : |

Méthode d'échange et d'authentification :
SAML . SOURCE ID .

Option:

Porte-Monnaie :

Plaque minéralogique :

Clé d'authentification entre serveur :
**Clé DIGITAL - ID : ZHDTRU567LK13.ZERD5 PSSWD: XDSE8**

L'invention est décrite dans ce qui précède à titre d'exemple. Il est entendu que l'homme du métier est à même de réaliser différentes variantes de l'invention sans pour autant sortir du cadre du brevet.

## Revendications

1. Système d'information (S.I.) pour l'authentification de l'identité numérique comprenant un serveur d'authentification, une pluralité de postes clients de serveurs secondaires et un réseau de communication, ledit SI mettant en oeuvre le SSO ( *Single Sign On*) **caractérisé en ce que** ladite identité numérique est portable d'un serveur à l'autre et **en ce que** la livraison de ladite identité est réalisée sur un support magnétique.

2. Système d'information (S.I.) pour l'authentification de l'identité numérique selon la revendication 1, **caractérisé en ce qu'**il est implémenté en SAML *(Security Assertion Markup Language).*

3. Système d'information (S.I.) pour l'authentification de l'identité numérique selon la revendication 1 ou 2, **caractérisé en ce qu'**il est constitué d'un Intranet au sein d'une entreprise.

4. Système d'information (S.I.) pour l'authentification de l'identité numérique selon la revendication 1 ou 2, **caractérisé en ce qu'**il est constitué à travers plusieurs réseaux d'entreprises partenaires en Extranet.

5. Système d'information (S.I.) pour l'authentification de l'identité numérique selon la revendication 1 ou 2, **caractérisé en ce qu'**il est constitué sur un réseau ouvert au public.

6. Système d'information (S.I.) pour l'authentification de l'identité numérique selon l'une quelconque des revendications 1 à 5, **caractérisé en ce que** ladite identité numérique est enregistrée dans des méta-annuaires d'entreprise.

7. Système d'information (S.I.) pour l'authentification de l'identité numérique selon l'une quelconque des revendications 1 à 6, **caractérisé en ce que** la livraison de l'identité est réalisée sur une clé USB.

8. Système d'information (S.I.) pour l'authentification de l'identité numérique selon l'une quelconque des revendications 1 à 6, **caractérisé en ce que** la livraison de l'identité est réalisée sur une carte mémoire ou un disque au format PCMCIA.

9. Système d'information (S.I.) pour l'authentification de l'identité numérique selon l'une quelconque des revendications 1 à 6, **caractérisé en ce que** la livraison de l'identité est réalisée sur une cartouche de mémoire.

10. Système d'information (S.I.) pour l'authentification de l'identité numérique selon l'une quelconque des revendications 1 à 9, **caractérisé en ce qu'**il met en oeuvre des mécanismes de paiement électronique.
